# EUROPÄISCHE PATENTSCHRIFT

(11) **EP 3 409 450 B1**
(45) Veröffentlichungstag und Bekanntmachung des Hinweises auf die Patenterteilung: **13.11.2019**
(21) Anmeldenummer: 17173390.0
(22) Anmeldetag: 30.05.2017
(51) Int. Cl.: B29C 65/36

(54) **SELBSTFAHRENDES BEFESTIGUNGSGERÄT UND VERFAHREN ZUM BEFESTIGEN VON ABDICHTUNGSBAHNEN**
SELF-PROPELLED FASTENING APPARATUS AND METHOD FOR FIXING SEALING STRIPS
APPAREIL DE FIXATION AUTOMOTEUR ET PROCÉDÉ DE FIXATION DE BANDES D'ÉTANCHÉITÉ

(43) Veröffentlichungstag der Anmeldung: 05.12.2018
(73) Patentinhaber: SFS Intec Holding AG, 9435 Heerbrugg (CH)
(72) Erfinder: BLUM, Kurt, 6842 Koblach (AT); GASSER, Daniel, 9444 Diepoldsau (CH); HEINZMANN, Thomas, 9008 St. Gallen (CH)

(56) Entgegenhaltungen:
- WO-A1-2014/072324
- DE-C1- 19 824 726
- FR-A1- 2 318 985

## Beschreibung

Die vorliegende Erfindung befasst sich mit einem selbstfahrenden Befestigungsgerät, das ausgelegt ist um selbsttätig Befestigungspunkte von Dachbahnen, Dachfolien bzw. Abdichtungsbahnen aufzusuchen und zu verschweissen sowie einem Verfahren hierzu.

### HINTERGRUND

Flachdächer sind heute bei Industrie- wie auch Wohnbauten Stand der Technik. Üblicherweise werden dabei auf einen statisch tragenden Untergrund aus Profilblechen, einer Holzunterkonstruktion oder Betonfläche Dämmschichten (e.g. Dämmschäume, -platten, Glas- und Steinwolle) aufgebracht und diese mit in Bahnen verlegten Abdichtungen abgedeckt. Diese Abdichtungsbahnen (alternativ auch als Materialbahn, Dachbahn, Dachfolie, Folienbahn bezeichnet) müssen zum einen an den Säumen miteinander verschweisst werden, zum anderen auch am Untergrund befestigt werden, da jede über die Fläche streichende Luftströmung einen Auftrieb bewirkt, der die Abdichtung anhebt. Die anfangs übliche Saumbefestigung sah vor, dass nur der Saum der gerade verlegten Abdichtungsbahn durch das Paket an Isolationsschichten hindurch an der Tragkonstruktion befestigt wird. Dann wird die nächste Bahn so überlappend mit der vorigen verschweisst, dass auch die Befestigungspunkte der früheren Bahn unter der neuen Abdichtung abgedeckt sind. Um die Zahl der Abdichtungsbahnen und damit die Laufmeter an Schweissnähten zu verringern, wurden immer breitere Abdichtungsbahnen verwendet, was aber die Befestigungssäume immer weiter auseinander bringt.

Daher wurde als Alternative zur Saumbefestigung die Feldbefestigung entwickelt. Bei einem im Markt bekannten Verlegeverfahren werden dabei die Befestigungselemente der Isolationsschichten mitverwendet. Diese Befestigungselemente bestehen häufig aus langen Schrauben oder Bolzen, deren erstes Ende in die Unterkonstruktion eingebracht wird und die am anderen (zweiten) Ende einen Kopf mit einer unterlagscheibenförmigen Verbreiterung aufweisen, die auf der Isolationsschicht aufliegt und diese festhält. Diese mehrere Zentimeter im Durchmesser grossen Kopfscheiben oder Lastverteilscheiben bevorzugt aus Metall verteilen flächig den Zug, der von dem punktförmig angebrachten Befestigern ausgeht. Die Kopfscheiben sind als Befestigungspunkte für die Folien (Materialbahnen) geeignet; hierzu werden sie mit einem Thermoplast oder einem Heissklebe-Material beschichtet. Nach Befestigung der Isolationsschichten können die Dachfolien bzw. Abdichtungsbahnen ausgerollt werden. An den Stellen, wo die Kopfscheiben sich befinden, wird durch die Bahn hindurch mittels eines Induktionsgerät die metallene Kopfscheibe erhitzt, woraufhin der aufgebrachte Klebstoff eine flächige Schmelzklebung zwischen der Unterseite der Abdichtungsbahn und der Kopfscheibe bewirkt.

Eine Nebenbedingung hierbei ist, dass, um eine intensive und belastbare Verklebung zu erreichen, ein Anpressdruck während der Abkühlphase gewährleistet werden muss.

Beim manuellen Verlegen nach dem vorbeschriebenen Verfahren wird die Lage der Kopfscheibe unter der Abdichtungsbahn mittels eines Sensors bestimmt (induktiv, magnetisch, ...) und das Induktions-Heizgerät genau platziert. Nach der Aufheizphase bzw. nach erfolgreichem Verschweissvorgang wird das Heizgerät durch einen Kühlkörper ersetzt. Das kann ein einfacher Metallkörper sein, der durch seine Masse sowohl den Anpressdruck gewährleistet wie auch der Wärmeableitung dient. Der Kühlkörper kann auch einen Magneten umfassen, der den Halte- und Anpressvorgang unterstützt. Nachteilig ist, dass der Verarbeitungsvorgang eine Vielzahl von Kühlkörpern erfordert, die nach Fortschritt verlegt und nach der Abkühlphase wieder eingesammelt werden müssen.

Weiter bekannte Probleme sind, dass das Auffinden der unter der Abdichtung unsichtbaren Kopfscheiben aufwändig ist und die Platzierung sowohl des Induktionsgerätes wie auch der Kühlkörper Erfahrung erfordert. Ein Übersehen von Kopfscheiben ist möglich, weil diese nicht immer in regelmässigen Abständen und Mustern verlegt werden können, weil eine Dachfläche Durchführungen, Gauben, Oberlichter, Entlüftungen oder andere Auf und Einbauten haben kann.

Diese über lange Zeit gleichzeitig anspruchsvolle wie auch eintönige Arbeit mit langen Wartezeiten wurde daher rasch zum Anlass von Automatisierungsbestrebungen.

### STAND DER TECHNIK

Im Stand der Technik sind mehrfach Verfahren und Roboter-ähnliche Vorrichtungen beschrieben worden, die den oben erläuterten Verlegevorgang einem mobilen Schweissgerät übertragen.

In der WO 2014/072324 ist ein Schweissroboter beschrieben, der ein Fahrwerk mit einem Elektroantrieb aufweist, eine auf dem Fahrwerk angeordnete Induktions-Schweissvorrichtung zum punktuellen Verschweissen einer Materialbahn mit schmelzkleber-beschichteten Kopfscheiben. Ferner berichtet dieser Stand der Technik von einem Navigationssystem zur Positionssteuerung sowie einer Anpress- und Kühlvorrichtung. Die Anpress- und Kühlvorrichtung besteht aus einem Magazin für Kühlkörper mit Magneten der oben bereits beschriebenen Art. Der Schweissroboter weist ein Fahrwerk mit einem Elektromotor, der auf Räder wirkt, sowie einen Detektor zur Erkennung der Position einer Kopfscheibe auf.

Der Schweissroboter gemäss diesem Stand der Technik setzt nach jedem Schweissvorgang einen solchen magnetischen Körper auf die Klebestelle und fährt zum nächsten Klebepunkt. Dieses unbestritten schnelle Verfahren hat jedoch einige entscheidende Nachteile, die die Alltagstauglichkeit auf der Baustelle massiv einschränken.
(a) Die magnetischen Kühlkörper haben ein nicht zu vernachlässigendes Gewicht. Der Schweissroboter muss also für eine sinnvolle Einsatzdauer einen grossen Vorrat mitnehmen und transportieren (können). Das setzt voraus, dass das Fahrwerk, die Motoren und die Auflagefläche der Antriebsräder auf diese Belastung ausgelegt sind. Die Flächenbelastung der frisch verlegten, noch nicht befestigten Materialbahn darf nicht überschritten werden, der Schweissroboter darf die Folienbahn nicht durch sein Eigengewicht verziehen.
(b) Der Vorrat an Kühlkörpern im Schweissroboter muss daher regelmässig aufgefüllt werden, was den Automatisierungsgrad entsprechend verringert.
(c) Werden magnetische Kühlkörper verwendet, muss die Konstruktion des Absetzgerätes wie auch des Magazins so ausgelegt sein, dass die Kühlkörper nicht magnetisch aneinander haften und ein sicheres Entnehmen und Platzieren gewährleistet ist.
(d) Das Fahrwerk des Roboters muss so ausgelegt werden, dass er entweder eine Bodenfreiheit aufweist, die ein Überfahren des Kühlkörpers erlaubt oder der Kühlkörper ausserhalb des Fahrwerks, z.B. an einem Ableger, abgesetzt wird.

Ein weiteres Problem betrifft die Positionssteuerung. Der Schweissroboter nach Stand der Technik muss die Position der nächsten Kopfscheiben entweder von einem externen Positionsbestimmungssystem erfahren oder durch Aufsuchen bestimmen. Für das Suchen bzw. das anschliessende Navigieren sind mehrere Verfahren bekannt. Verfügt der Schweissroboter über ein Präzisions-GPS und ist die Lage der Fläche genau bestimmt, kann der Schweissroboter die zu behandelnde Fläche autonom abfahren. Über Optimierungsroutinen kann die Navigationseinheit beispielsweise den kürzesten / besten Fahrweg ermitteln und ansteuern. Nachteilig sind hierbei (e) die sehr anspruchsvolle Software und die notwendig genaue Vermessung der Bearbeitungsfläche.

Alternativ könnte ein Schweissroboter auch ein Zufallsverfahren verwenden, wie man es von Rasenmährobotern oder Bodenreinigungsgeräten kennt. Dabei arbeitet sich der Roboter geradlinig voran, bis er auf ein Hindernis oder eine Begrenzungslinie trifft, dreht dort um einen bestimmten Winkel am Ort und setzt seine Fahrt fort. Dieses Verfahren ist denkbar einfach, setzt aber voraus, dass die Ränder der Bearbeitungsfläche sauber markiert sind. Gravierendere Nachteile sind jedoch, dass (f) eine Vielzahl von Fahrten nach dem Zufallsprinzip durchgeführt werden müssen, um ausreichend sicher zu gehen, dass jedes Areal der zu bearbeitenden Fläche auch erreicht wurde. Bei einer mit einer Vielzahl von Lüftungsöffnungen, Oberlichtern und Dachaufbauten versehenen Fläche ist das Verfahren daher ineffizient. Zudem muss gleichzeitig verhindert werden (g), dass eine bereits behandelte Kopfscheibe ein zweites Mal erkannt und erhitzt wird. Neben der Zeitverschwendung wird dies die Qualität der Verklebung nicht verbessern, eine wiederholte thermische Belastung der Dachfolie ist unerwünscht. Der Schweissroboter müsste konsequenterweise die Fähigkeit besitzen, eine bereits verschweisste Kopfscheibe von einer unverklebten zu unterscheiden, was einen Spezialaufwand an Sensorik und Auswertelogik erfordert.

Verfahren, die den Roboter lediglich fernsteuern und den Fahrpfad z.B. extern ermitteln bedingen ebenfalls einen hohen apparativen und softwaretechnischen Aufwand und sind daher teuer.

Die vorliegende Erfindung hat daher das Ziel, die oben beschriebenen Problem zu lösen und ein praxistaugliches, weitgehend autonom arbeitendes Gerät zum Befestigen von Abdichtungsbahn vorzustellen. Ferner wird ein Verfahren zum Befestigen von solchen Abdichtungsbahn beschrieben.

### BESCHREIBUNG DER ERFINDUNG

Diese Aufgabe wird durch ein selbstfahrendes Befestigungsgerät mit den Merkmalen des unabhängigen Anspruchs 5 gelöst, welches ein Verfahren nach Anspruch 1 anwendet. Unteransprüche beschreiben jeweils weitere Varianten und Ausführungsformen.

Ein Verfahren zum Befestigen von Materialbahnen 13 wie Dachbahnen aus Kunststoff erfolgt auf einer Fläche mit darauf angeordneten Befestigungspunkten 16, wobei die Befestigungspunkte 16 als metallische Kopfscheiben 14 ausgebildet sind und eine zur Materialbahn 13 hinweisenden Schmelz-Klebeschicht haben. Diese Elemente sind aus dem Stand der Technik bekannt. Die Befestigungspunkte sind die Lastverteilscheiben der Befestiger 15, mit denen die Dämmplatten oder -elemente 12 auf der Dachunterkonstruktion 11 gehalten werden. Ein selbstfahrendes Befestigungsgerät 20 führt dabei folgende Schritte aus:
(A) Erkennen einer an der Fläche angebrachten Fahrwegmarkierung durch einen ersten Detektor 22 am Befestigungsgerät 20 und Verfahren des Befestigungsgeräts entlang der Fahrwegmarkierung.

Das Verfahren gemäss Erfindung benötigt keine GPS Messgeräte und verlässt sich ebenfalls nicht auf ein zufallsgesteuertes oder computerbasiertes Suchverfahren, sondern verwendet eine vorher auf der Dachfläche angebrachte Fahrwegmarkierung. Diese auf den ersten Schritt aufwändig erscheinende Markierung kann aber sehr leicht aufgebracht werden und hat mehrfache, spezifische Vorteile.

Die Fahrwegmarkierung kann in einem bevorzugten Fall ein farbiger Klebestreifen sein, der temporär oder permanent auf der Abdichtungsbahn (Dachfolie, Dachbahn, Materialbahn) aufgeklebt wird. Abrollgeräte zum vereinfachten Aufbringen sind Stand der Technik, sie können von einem Arbeiter allein beim Abgehen der Dachfläche zügig und in einem Arbeitsgang aufgebracht werden. Auch Kurven oder winklig abknickende Verläufe sind mit so einem Gerät ohne zusätzliche Massnahmen realisierbar. Mittels seitlich angebrachter Abstandshalter lassen sich parallel verlaufende Fahrwege (zur Abdeckung grosser Flächen) präzise und einfach realisieren. Die Vorteile sind vielfältig: Korrekturen des Verlaufs sind einfach möglich, Hindernisse können optimal geplant oder nach Bedarf umgangen werden und nach Fertigstellung sind die Klebebänder einfach zu entfernen und entsorgen. Zudem stellen die Fahrwegmarkierungen ein nicht zu unterschätzendes Sicherheitsmerkmal dar: Die zu befahrenden Bereiche sind optisch hervorgehoben, kritische Stellen (Blockaden durch Material oder Werkzeug, mögliche Absturzstellen) sind sofort zu erkennen, noch nicht abgedeckte Bereich sind sichtbar. Die geplante Fahrtrichtung des Befestigungsgeräts ist visuell erkennbar, was die Abgrenzung von Bereichen, in denen Arbeiter sich aufhalten, erleichtert. Zudem können mehrere unabhängige Fahrtwege über getrennte Markierungen realisiert werden, was sehr einfach den Einsatz mehrerer Befestigungsgeräte gleichzeitig erlaubt, ohne dass Kollisionen zu befürchten sind. Das kann die Befestigungsdauer substantiell verkürzen. Nicht zuletzt kann die Markierung und der nachfolgende Befestigungsvorgang zeitlich gestaffelt nach Verlegefortschritt erfolgen. Ferner können die Markierungen farblich unterschiedlich ausgelegt werden, was die Unterscheidung verschiedener Arbeitsbereiche erlaubt.

Ist die Fahrwegmarkierung wie beschrieben auf der Abdichtungsbahn angebracht, bietet sich an, dass der erste Detektor (22) ein optisches Erkennungsverfahren nutzt, um den Fahrweg zu erkennen. Das kann ein einfaches Kamerasystem sein, das mittels Kontrastdetektion den Klebestreifen von der Materialbahn unterscheidet, eine CCD-Zeile, die z.B. das reflektierte Licht der von einer UV-Lichtdiode vor dem Detektor angestrahlten Dachfläche erkennt und die unterschiedlichen Reflexionsgrade von Klebestreifen und Abdichtungsbahn unterscheiden kann.

Alternativ zum Klebestreifen ist natürlich auch ein Farbauftrag möglich. Ist die Farbe wasserlöslich und umweltfreundlich, kann unter Umständen sogar ein Entfernen der Markierung entfallen.

Alternativ kann auch eine permanente Fahrwegmarkierung unsichtbar unterhalb der Materialbahn aufgebracht werden, beispielsweise ein Draht oder Kabel, das der erste Detektor 22 mit Hilfe eines induktiven, magnetischen oder kapazitiven Erkennungsverfahrens aufspürt. Der visuelle Vorteil der leichten Entfernbarkeit entfällt zwar, dafür kann aber diese Markierung auch später erneut benutzt werden, um die Dachfläche abzufahren. Eine Anwendung für Reinigungsgeräte oder andere Wartungszwecke wäre möglich. Weiters sind bei dieser Art von Fahrwegmarkierung die metallischen Kopfscheiben beim Anbringen der Markierung offen sichtbar da die Dachbahn noch nicht verlegt ist. Die Fahrbahnmarkierung kann dadurch entsprechend gut optimiert werden.

Die Auswertung der Signale vom ersten Detektor erfolgen durch Software in einer Rechnereinheit, die entsprechende Steuerbefehle an eine Navigationseinheit weitergibt. Die Navigationseinheit kann auch als Funktion der Rechnereinheit realisiert werden bzw. in ihr integriert werden.

Währen der erste Detektor alleine der Orientierung am Fahrweg dient, ist ein zweiter Detektor zuständig für das
(B) Erkennen einer unter der Materialbahn liegenden Kopfscheibe 14 und die Ermittlung der Position der Kopfscheibe 14

Dazu muss der Detektor in der Lage sein, die Kopfscheibe ortsaufgelöst im Vorbeifahren zu erkennen. Es hat sich am effizientesten erwiesen, dass diese Funktion durch eine über die Fahrzeugbreite des Befestigungsgerätes angeordnete einzeilige Anordnung von Metalldetektoren induktiv erfolgt. Das von den Sensoren gemeldete Signal erlaubt die Lage und Ausdehnung der Kopfscheibe zu erkennen und als 2D-"Karte" zu speichern. Durch Vergleich mit Sollprofilen lässt sich sogar feststellen, ob das erkannte Metallobjekt eine Kopfscheibe oder ein zu ignorierender Fremdkörper ist. In einer bevorzugten Ausführungsform ist das als Bearbeitungsschritt (B1) zusammengefasst:
(B1) Erkennen der Position der metallischen Kopfscheibe 14 relativ zum Befestigungsgerät 20 mittels einer linear, quer zur Fahrtrichtung angeordneten Detektorzeile (zweiter Detektor 24), gebildet aus diskreten Induktionssensoren 25.

Bei bekannter Fahrgeschwindigkeit und bekanntem Abstand zwischen zweitem Detektor und der Arbeitsposition des Induktionsschweissgerätes lässt sich der noch zurückzulegende Weg Sr bzw. die Fahrtzeit ermitteln. Das wird weiter unten als bevorzugter, weiterer Ausführungsschritt (B2) zusammengefasst:
(B2) Berechnen der noch nötigen Fahrstrecke Sr entlang der Fahrwegmarkierung,
bis eine erste Arbeitsposition des Befestigungsgerätes 20 erreicht ist.

Diese Informationen erlauben, den Verfahrensschritt (C) zu realisieren:
(C) Anfahren und Verharren an einer Arbeitsposition während des Befestigungsvorgangs (D)-(F)

Dabei insbesondere als Zwischenschritte
(C1) Verfahren des Befestigungsgerätes 20 um die Strecke Sr
(C2) Anhalten des Befestigungsgerätes 20

Mit Arbeitsposition ist hierbei gemeint, dass das Bearbeitungsgerät die Kopfscheibe mit allen für den Befestigungsvorgang notwendigen Werkzeugen (Heizen, Kühlen,..) erreichen kann. Am einfachsten wird dies erzielt, wenn diese Werkzeuge innerhalb des Bearbeitungsgerätes beweglich angeordnet sind und motorisch gesteuert in x-, y-, und z- Richtung versetzbar sind. Mit x-Richtung ist dabei eine Bewegung in Fahrzeuglängsachse gemeint ("in Fahrtrichtung") und die y-Richtung quer dazu, jeweils in einer Ebene parallel zur Dachbahn bzw. parallel zur Arbeitsfläche. Die z-Richtung wäre in einem kartesischen Bezugssystem folgerichtig die Bewegung orthogonal zur Arbeitsfläche, entspräche also dem Annähern oder Entfernen von der Dachbahn. Eine x/y/z-Beweglichkeit ist dabei nicht zwingend, es könnte auch ein um ein festen Punkt rotierenden, verstellbaren Ausleger handeln (auf Polarkoordinaten basierendes System). Diese Feinpositionierung erlaubt folgerichtig das
(D) Positionieren eines Induktionsheizgerätes 30 und Aufheizen der Kopfscheibe 14 für eine Zeitspanne Th.

In einer verfeinerten Ausführungsform von Schritt (D) kann die Positionierung des Induktionsheizgerätes präzisiert werden, indem die Informationen aus Schritt (B1) nur als erste Annäherung Verwendung finden:
(D1) Positionieren einer Feinmessvorrichtung (39) anhand der Informationen aus Schritt (B1) über der ersten Arbeitsposition

Wird z.B. eine weitere Messvorrichtung bzw. Feinmessvorrichtung 39 als Werkzeug vorgesehen, lässt sich die exakte Lage der Kopfscheibe noch genauer feststellen. Dies kann notwendig sein, weil die Fahrsteuerung des Befestigungsgerätes 20 nicht präzise ist und die Orts-Information über die Kopfscheibe leicht verfehlt wird. Nachdem das Induktionsheizgerät nur bei genauer Positionierung eine effiziente Aufheizung gewährleisten kann, hat eine Positioniergenauigkeit im niedrigen einstelligen Millimeterbereich gegenüber einer Genauigkeit im Zentimeterbereich erheblichen Einfluss auf die Qualität der Verbindung von Dachbahn und Kopfscheibe. Die Feinmessvorrichtung kann bevorzugt als Satz von Induktionsmessspulen kreisförmig am Umfang des Kühlkörpers realisiert werden. Wenn das Messsignal aller Sensoren im Wesentlichen gleich ist, ist die Position zentriert. Abweichungen der Sensorsignale geben ortsaufgelöst den Versatz an. Diese Sensordaten erlauben daher die
(D2) Präzisierung der ermittelten ersten Arbeitsposition anhand der Informationen der Feinmessvorrichtung (39) und Festlegen einer zweiten, präzisierten Arbeitsposition

Folgerichtig lässt sich das Induktionsheizgerät 30 nunmehr besser ausrichten und
(D3) Positionieren an der zweiten Arbeitsposition

In Konsequenz wird der letzte Schritt mit dem oben beschriebenen Prozessschritt (D) übereinstimmen
(D4) Aufheizen der Kopfscheibe (14) für eine Zeitspanne Th

Mit "Positionieren" in (D) bzw. (D3) wird, je nach Auslegung des Heizgerätes, ein "direktes Auflegen" auf die Materialbahn gemeint oder ein "in einem definierten Abstand halten". Die Zeitspanne Th wird dabei festgelegt von der Leistung des Induktionsheizgerätes, der Art des Klebers, der Umgebungstemperatur und anderen Faktoren. Die Zeitspanne kann fest vorgegeben werden oder dynamisch durch einen Regelkreis mittels in-situ Temperaturmessung ermittelt werden. Hat sich der Schmelzkleber ausreichend verflüssigt, erfolgt der nächste Verfahrensschritt:
(E) Entfernen des Induktionsheizgerätes 30 und Andrücken der Materialbahn an die Kopfscheibe mittels einer Kühleinrichtung 32

Das Ersetzen der Induktionseinrichtung durch eine Kühleinrichtung am selben Ort kann durch dieselbe Mechanik erzielt werden, die das Absetzen des Induktionsheizgerätes erlaubte. Das Andrücken der Materialbahn durch die Kühleinrichtung kann durch das Eigengewicht der Kühleinrichtung erfolgen, kann magnetisch oder elektromagnetisch unterstützt werden und/oder durch die Absenkmechanik (z-Richtung) erzielt werden, die das Eigengewicht des Befestigungsgerätes als Gegengewicht nutzt. Nach einer wiederum durch verschiedene Parameter vor bestimmten oder dynamisch gemessenen Abkühlzeit Tk kann
(F) das Abheben der Kühleinrichtung erfolgen.

Damit ist der Befestigungsvorgang für eine Kopfscheibe abgeschlossen. Das Befestigungsgerät kann seine Fahrt entlang der Wegmarkierung fortsetzen. Das beschreibt der Verfahrensschritt
(G) Fortfahren mit (A), bis ein Ende der Fahrwegmarkierung erreicht ist.

Der Vergleich des Standes der Technik mit dem oben beschriebenen Verfahren macht klar, dass bei diesem Befestigungsverfahren trotz der beschriebenen Vorzüge es als nachteilig angesehen werden könnte, dass das Befestigungsgerät den "passiven" Abkühlungsschritt abwarten muss, weil eben kein Magazin mit absetzbaren Kühlkörpern vorgesehen ist. Sollen ein oder mehrere Befestigungsgeräte jedoch beispielsweise die Nachtzeit ausnützen und autonom eine grosse Fläche bearbeiten, fällt diese Warte-Abkühlzeit weniger ins Gewicht - die Unabhängigkeit von mitzuführenden, absetzbaren Kühlkörpern ist dann sogar Voraussetzung.

Sollte es, beispielsweise aufgrund eines absehbaren Wetterumschwungs aber notwendig sein, den Befestigungsprozess zu beschleunigen, kann das Verfahren abgekürzt werden, indem das Bearbeitungsgerät einfach die Schritte (E) und (F) auslässt. Das Aufsetzen der Kühlkörper müsste dann manuell erfolgen, in der üblicherweise notwendigen Abkühlzeit würde das Bearbeitungsgerät bereits die nächste Klebestelle bearbeiten. Es ist hervorzuheben, dass das Bearbeitungsgerät so einen Schnellgang alleine mit einer einfachen Programmvariation erreichen kann, ohne dass dafür das Gerät selbst umgebaut werden müsste.

Wenn man den Fokus auf das Befestigungsgerät selbst und seine technischen Bestandteile bzw. wesentlichen technischen Merkmale legt, so muss es dazu ausgelegt und in der Lage sein, ein Verfahren wie oben beschrieben auszuführen. Dazu wird ein selbstfahrendes Befestigungsgerät 20 ein Fahrwerk benötigen mit mindestens einem Elektromotor, der auf Räder 26, 27, Raupen oder andere Antriebsmittel wirkt. Der Begriff "selbstfahrend" meint hierbei, dass es einen Eigenantrieb besitzt, aber nicht zwingend vollständig autonom arbeiten kann, sondern gesteuert von seiner Rechnereinheit und von aussen vorgegebenen Parametern. Unter dem Begriff Fahrwerk werden alle Antriebsvarianten verstanden, die im Stand der Technik bekannt sind, wie Achsantriebe, Einzelradantriebe, Ketten- und Raupenantriebe oder Kombinationen hiervon. Mit Rädern sind neben den bekannten Rädern auch sogenannte Omniwheels mitumfasst; Räder, die es erlauben am Ort auf der Stelle zu drehen. Ein Fachmann wird je nach Auslegung des Befestigungsgerät die passende Variante wählen.

Als Werkzeuge im oben benutzten Kontext umfasst das Befestigungsgerät zumindest ein Induktionsheizgerät 30 zum Aufheizen einer metallischen Kopfscheibe 14 und eine Kühleinrichtung 32 zum Andrücken und Kühlen einer Klebestelle zwischen einer Materialbahn 13 und der metallischen Kopfscheibe 14. Diese beiden Werkzeuge sind für die Kernfunktionen des Befestigungsgerätes verantwortlich. Zur Orientierung und Navigation des Gerätes dienen ein erster Detektor 22 zum Erkennen einer Fahrwegmarkierung und ein weiterer, zweiter Detektor 24 zur Erkennung der Position einer Kopfscheibe. Die Funktion dieser beiden Detektoren wurde oben ausführlich beschrieben.

Zur Orientierung bzw. zum Fahren auf der Arbeitsfläche umfasst das Befestigungsgerät ferner eine Navigationseinrichtung und mindestens eine Rechnereinheit zur Auswertung von Detektorsignalen, zur Ermittlung von Fahrsignalen und zur Steuerung des Befestigungsvorganges. Die Navigationseinrichtung umfasst somit im engeren Sinne die Motorensteuerung und Sensoren bzw. Aktuatoren die zur Erkennung und Überwachung des Fahrverhaltens des Gerätes verantwortlich und notwendig sind.

Wie oben im Verfahrensteil beschrieben, macht es Sinn, das Induktionsheizgerät und die Kühleinrichtung möglichst genau über dem ermittelten Ort der Kopfscheibe zu platzieren. Wären Induktionsheizgerät 30 und Kühleinrichtung 32 ortsfest im Befestigungsgerät angebracht, müsste das gesamte Gerät auf Feinpositionierung ausgelegt sein. Das ist jedoch aufwändiger, als eine zusätzliche Positioniereinrichtung 36, 38 vorzusehen, die eine Fein-Ausrichtung des Induktionsheizgerätes 30 bzw. der Kühlvorrichtung 32 erlaubt, während das Befestigungsgerät 20 selbst in der Arbeitsposition verharrt. Die Feinpositionierung findet also im oder am Befestigungsgerät selbst statt. Weitaus bevorzugt würde man eine Positioniereinrichtung 36, 38 vorsehen, welche die Feineinrichtung in alle drei kartesischen Raumachsen erlaubt. Die Ausrichtung in x-y-z Richtung gestattet auch, die Werkzeuge anzuheben und abzusenken. Darüber hinaus ist es vorteilhaft, die Positioniereinrichtung 36, 38 derart auszulegen, dass sie in der Lage ist, das Induktionsheizgerät 30 bzw. die Kühleinrichtung 32 mit definiertem Anpressdruck auf einer Sollposition anzudrücken. Damit lässt sich gewährleisten, dass auch bei nicht perfekter Planlage von Kopfscheibe zu Werkzeug die beste Verschweissung von Dachbahn und Kopfscheibe erreicht wird.

Die Kühleinrichtung spielt eine wichtige Rolle bei der gesamten Bearbeitungszeit. Wie oben erläutert, hängt die Stärke der Verklebung bzw. Verschweissung mit davon ab, wie innig der Kontakt zwischen Materialbahn und Kopfscheibe ist, weil dadurch gewährleistet werden kann, dass die flächige Verklebung bzw. Verschweissung so vollständig wie möglich erfolgt. Im einfachsten Fall wird daher als Kühleinrichtung 32 ein passiver Kühlkörper gewählt. Das erfordert in der Regel eine grosse Masse, um die Wärmeabfuhr zu gewährleisten. In einer Weiterbildung ist es denkbar, einen Kühlkörper mit einer fluid- oder gasunterstützten, aktiven Kühlung einzusetzen. Damit ist gemeint eine Rückkühlung des Kühlkörpers mit einem flüssigkeitsbasierten Umwälz-System, einer Kühlung durch Expansion eines komprimierten Gases, ein elektrischer Lüfter oder eine elektrische Kühlung mittels Peltier-Elementen.

Um die vorbeschriebene Feinpositionierung weiter zu verbessern, hat es sich als vorteilhaft herausgestellt, an der Kühleinrichtung 32 mindestens einen dritter Detektor 39 oder einen Satz von Detektoren 39a-d anzubringen, welche in einem Feedback-Loop mit der Positioniereinrichtung stehen und als Feinmessvorrichtung 39 die Feinpositionierung unterstützen. Die Anbringung an der Kühleinrichtung macht aus 3 Gründen Sinn: Erstens benötigt man keine weitere Werkzeugstation, die positioniert werden muss. Nachdem der letzte Prozessschritt der Befestigung die Abkühlung ist und der erste die Feinpositionsermittlung, kann das als letztes verwendete Werkzeug auch als erstes verwendet werden. Nicht zuletzt können evtl. Störeinflüsse der Heiz-Induktionsspule dadurch verringert werden. Sollten diese für den Sensor keine Rolle spielen, so kann der dritte Detektor 39 oder Satz von Detektoren 39a-d auch um das Induktionsheizgerät 30 herum angeordnet werden.

Um die Feinpositionierung nur einmal für alle Werkzeuge durchführen zu müssen, ist es vorteilhaft, das Induktionsheizgerät 30 und die Kühlvorrichtung 32 in einer rotierbaren Revolvervorrichtung 34 zu montieren, welche es ermöglicht, alternierend das Induktionsheizgerät 30 oder die Kühlvorrichtung 32 durch eine Drehbewegung über derselben Sollposition auf der Fläche zu positionieren, ohne das Befestigungsgerät 20 selbst oder die Positioniereinrichtung 36, 38 zu bewegen. In der Logik der oben beschriebenen x/y/z-Koordinaten liegt also eine Rotation um die z-Achse vor. In einer Weiterbildung könnte man den Revolver auch so auslegen bzw. vergrössern, dass er mehr als 2 Positionen aufweist. Ist eine weitere Position verfügbar, kann diese zur Aufnahme einer Markiervorrichtung, einer Messplattform oder Mitteln zur Qualitätsprüfung verwendet werden. Das können optische oder mechanische Prüfungen sein, Dokumentationsaufgaben oder Markierungen, die die Lage und die Fertigstellung belegen.

Für alle oben beschriebenen Varianten des Bearbeitungsgerätes ist eine Versorgung mit elektrischer Energie implizit vorausgesetzt. Diese kann durch mitgeführte Akkumulatoren plus evtl. Solarzellen auf der Geräteoberseite oder durch ein Schleppkabel als Verbindung zum öffentlichen Stromnetz in bekannter Weise erfolgen.

### BESCHREIBUNG DER FIGUREN

Die Erfindung wird nun mit Bezug auf die begleitenden Zeichnungen beispielhaft kurz erläutert.
- Figur 1: zeigt einen schematischen Dachaufbau, wie im Stand der Technik bekannt
- Figur 2: zeigt ein Bearbeitungsgerät in einer Ansicht von unten

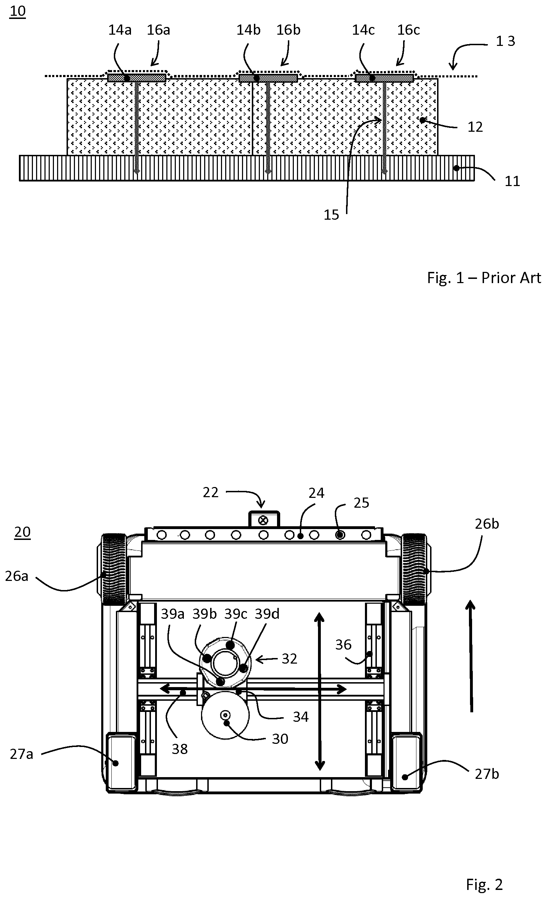

Figur 1 zeigt einen Dachaufbau 10 mit einer Dach-Unterkonstruktion 11 (Holz, Metallbau, Beton,..) und einer darauf angebrachten Dämmschicht 12. Diese Dämmschicht ist mit Befestigern 15 in der Unterkonstruktion 11 verankert. Die Befestiger weisen an ihrem oberen, auf der Dämmschicht 12 aufliegenden Ende Lastverteilscheiben oder Kopfscheiben 14 (a-c) auf, die für eine darüber ausgelegte Materialbahn 13 als Befestigungspunkte 16 (a-c) dienen sollen.

Figur 2 zeigt ein Befestigungsgerät 20 von unten gemäss der hier beschriebenen Erfindung. Die generelle Verfahrrichtung (Arbeitsrichtung) ist durch den rechts daneben gezeigten Pfeil angedeutet. Das Befestigungsgerät 20 verfügt über ein Fahrwerk mit Rädern 26a, b und 27a, b. Das Fahrwerk kann in bekannter Weise durch Einzelradsteuerung so ausgelegt sein, dass das Befestigungsgerät 20 einen möglichst engen Wendekreis besitzt. Dazu können 2 oder alle Räder schwenkbar ausgeführt sein. Zur Orientierung an einer Wegmarkierung dient ein erster Detektor 22 (CCD-Zeile, Kamera, optischer Detektor für bestimmte Wellenlängen, Magnetfeld- oder Metallsensor,...), dessen Signal dazu dient, eine eventuelle Abweichung der Arbeitsrichtung von der Wegmarkierung zu erkennen. Ein zweiter Detektor 24 ist als zeilenförmiger Detektor, gebildet aus diskreten Induktionssensoren 25, gezeigt. Er dient der Erkennung von Metall wie den erwähnten Kopfscheiben 14.

In einer um x-y-Richtung verfahrbaren Positioniereinrichtung 36, 38 können eine Kühlstation 32 und ein Induktionsheizgerät 30 innerhalb des Perimeters des Fahrwerks bewegt werden, wie durch die beiden Doppelpfeile angedeutet. Damit ist die Feinausrichtung dieser Werkzeuge auf eine Position möglich, an der eine Kopfscheibe 14 im Untergrund vermutet wird. Die Werkzeuge können an einer Revolvervorrichtung 34 gedreht werden und so nacheinander dieselbe Position bearbeiten. An der Kühleinrichtung können weitere Detektoren 39a-d angebracht sein, die eine Feinpositionierung unterstützen können.

Die nicht-explizite Darstellung einer Kombination von Merkmalen der in dieser Schrift dargestellten Erfindung bedeutet nicht, dass eine solche Kombination nicht sinnvoll oder nicht möglich ist. Umgekehrt bedeutet eine gemeinsame Darstellung von Merkmalen nicht, dass zwischen den Merkmalen in jedem Fall ein struktureller und/oder funktioneller Zusammenhang besteht.

### BEZUGSZEICHENLISTE

Mehrfach identisch vorkommende Merkmale sind mit den Buchstaben a, b, c gekennzeichnet.
- 10: Dachaufbau
- 11: (Dach-)Unterkonstruktion
- 12: Isolation, Isolationsschichten, oder -blöcke, Dämmschicht
- 13: Folie(n), Dachfolie, Materialbahn, Abdichtungsbahn
- 14: (metallische) Kopfscheibe(n)
- 15: Befestiger
- 16: Befestigungspunkt(e)

- 20: Befestigungsgerät, selbstfahrend, Befestigungseinrichtung
- 22: erster Detektor
- 24: zweiter Detektor, Detektorzeile
- 25: Induktionssensor
- 26, 27: Räder
- 30: Induktionsheizgerät
- 32: Kühleinrichtung
- 34: rotierbaren Revolvervorrichtung
- 36, 38: zusätzliche Positioniereinrichtung, in x (36)- und y-Richtung (38)
- 39: Feinmessvorrichtung, dritter Detektor, Satz von Detektoren

## Patentansprüche

1. Verfahren zum Befestigen von Materialbahnen (13) wie Dachbahnen aus Kunststoff auf einer Fläche mit darauf angeordneten Befestigungspunkten (16), mittels eines selbstfahrenden Befestigungsgeräts (20), wobei die Befestigungspunkte (16) als metallische Kopfscheiben (14) ausgebildet sind mit einer zur Materialbahn hinweisenden Schmelz-Klebeschicht; folgende Schritte umfassend:
(A) Erkennen einer an der Fläche angebrachten Fahrwegmarkierung durch einen ersten Detektor (22) am Befestigungsgerät (20) und Verfahren des Befestigungsgeräts entlang der Fahrwegmarkierung
(B) Erkennen einer unter der Materialbahn liegenden Kopfscheibe (14) mittels eines zweiten Detektors (24) und Ermittlung der Position der Kopfscheibe (14)
(C) Anfahren und Verharren an einer Arbeitsposition während des Befestigungsvorgangs (D)-(F)
(D) Positionieren eines Induktionsheizgerätes (30) und Aufheizen der Kopfscheibe (14) für eine Zeitspanne Th
(E) Entfernen des Induktionsheizgerätes (30) und Andrücken der Materialbahn an die Kopfscheibe mittels einer Kühleinrichtung (32)
(F) Abheben des Kühleinrichtung nach Ablauf einer vorgegebenen Zeit Tk
(G) Fortfahren mit (A), bis Ende der Fahrwegmarkierung erreicht ist

2. Verfahren nach Anspruch 1, **dadurch gekennzeichnet, dass** die Fahrwegmarkierung auf der Materialbahn angebracht ist und der erste Detektor am Befestigungsgerät ein optisches Erkennungsverfahren nutzt.

3. Verfahren nach Anspruch 1, **dadurch gekennzeichnet, dass** die Fahrwegmarkierung unter der Materialbahn angebracht ist und der erste Detektor am Befestigungsgerät ein induktives, magnetisches oder kapazitives Erkennungsverfahren nutzt.

4. Verfahren nach Anspruch 1-3, **dadurch gekennzeichnet, dass** die Verfahrensschritte (B) bis (D) unterteilt werden können in:
(B1) Erkennen der Position der metallischen Kopfscheibe (14) relativ zum Befestigungsgerät (20) mittels einer linear, quer zur Fahrtrichtung angeordneten Detektorzeile (zweiter Detektor (24)), gebildet aus diskreten Induktionssensoren (25)
(B2) Berechnen der noch nötigen Fahrstrecke Sr entlang der Fahrwegmarkierung, bis eine erste Arbeitsposition des Befestigungsgerätes (20) erreicht ist
(C1) Verfahren des Befestigungsgerätes (20) um die Strecke Sr
(C2) Anhalten des Befestigungsgerätes (20)
(D1) Positionieren einer Feinmessvorrichtung (39) anhand der Informationen aus Schritt (B1) über der ersten Arbeitsposition
(D2) Präzisierung der ermittelten ersten Arbeitsposition anhand der Informationen einer Feinmessvorrichtung (39) und Festlegen einer zweiten, präzisierten Arbeitsposition
(D3) Positionieren des Induktionsheizgerätes (30) an der zweiten Arbeitsposition
(D4) Aufheizen der Kopfscheibe (14) für eine Zeitspanne Th

5. Selbstfahrendes Befestigungsgerät (20) zur Durchführung eines Verfahrens gemäss Anspruch 1-4, aufweisend:
- ein Fahrwerk mit mindestens einem Elektromotor, der auf Räder (26, 27), Raupen oder andere Antriebsmittel wirkt;
- Ein Induktionsheizgerät (30) zum Aufheizen einer metallischen Kopfscheibe (14)
- eine Kühleinrichtung (32) zum Andrücken und Kühlen einer Verbindungsstelle zwischen einer Materialbahn (13) und der metallischen Kopfscheibe (14)
- ein erster Detektor (22) zum Erkennen einer Fahrwegmarkierung
- ein zweiter Detektor (24) zur Erkennung der Position einer Kopfscheibe
- eine Navigationseinrichtung zum Verfahren der Befestigungseinrichtung (20)
- mindestens eine Rechnereinheit zur Auswertung von Detektorsignalen, zur Ermittlung von Fahrsignalen und zur Steuerung des Befestigungsvorganges.

6. Selbstfahrendes Befestigungsgerät (20) nach Anspruch 5, mit einer zusätzlichen Positioniereinrichtung (36, 38), die eine Fein-Ausrichtung des Induktionsheizgerätes (30) bzw. der Kühlvorrichtung (32) erlaubt, während das Befestigungsgerät (20) selbst in der Arbeitsposition verharrt.

7. Selbstfahrendes Befestigungsgerät (20) nach Anspruch 5-6, **dadurch gekennzeichnet, dass** die Positioniereinrichtung (36, 38) die Feineinrichtung in alle drei kartesischen Raumachsen erlaubt.

8. Selbstfahrendes Befestigungsgerät (20) nach Anspruch 5-7, **dadurch gekennzeichnet dass** die Positioniereinrichtung (36, 38) derart ausgelegt ist, das Induktionsheizgerät (30) bzw. die Kühleinrichtung (32) mit definiertem Anpressdruck auf einer Sollposition anzudrücken.

9. Selbstfahrendes Befestigungsgerät (20) nach Anspruch 5-8, **dadurch gekennzeichnet, dass** die Kühleinrichtung (32) ein passiver Kühlkörper ist.

10. Selbstfahrendes Befestigungsgerät (20) nach Anspruch 5-8, **dadurch gekennzeichnet, dass** die Kühleinrichtung (32) ein Kühlkörper mit einer fluid-, gasunterstützten oder elektrischen aktiven Kühlung ist.

11. Selbstfahrendes Befestigungsgerät (20) nach Anspruch 5-10, **dadurch gekennzeichnet, dass** an der Kühleinrichtung (32) mindestens ein dritter Detektor (39) oder Satz von Detektoren (39a-d) angebracht ist, welche in einem Feedback-Loop mit der Positioniereinrichtung stehen und als Feinmessvorrichtung (39) die Feinpositionierung unterstützen.

12. Selbstfahrendes Befestigungsgerät (20) nach Anspruch 5-11, **dadurch gekennzeichnet dass** das Induktionsheizgerät (30) und die Kühlvorrichtung (32) in einer rotierbaren Revolvervorrichtung (34) montiert sind, welche es ermöglicht, alternierend das Induktionsheizgerät (30) oder die Kühlvorrichtung (32) durch eine Drehbewegung über derselben Sollposition auf der Fläche zu positionieren, ohne das Befestigungsgerät (20) selbst oder die Positioniereinrichtung (36, 38) zu bewegen.

13. Selbstfahrendes Befestigungsgerät (20) nach Anspruch 5-12, **dadurch gekennzeichnet dass** die rotierbare Revolvervorrichtung (34) mindestens eine weitere Position aufweist, die zur Aufnahme einer Markiervorrichtung, einer Messplattform oder Mitteln zur Qualitätsprüfung erlaubt.

14. Selbstfahrendes Befestigungsgerät (20) nach Anspruch 5-10, **dadurch gekennzeichnet, dass** mindestens ein dritter Detektor (39) oder ein Satz von Detektoren (39a-d) um das Induktionsheizgerät (30) herum angeordnet sind.

## Claims

1. A method for fastening material webs (13), such as roofing sheets, made of plastics on a surface with fastening points (16) arranged thereon by means of a self-propelled fastening unit (20), the fastening points (16) being formed as metallic head disks (14) including a hot-melt adhesive layer directed toward the material web, comprising the steps of:
(A) detecting a route marking affixed to the surface by a first detector (22) on the fastening unit (20) and moving the fastening unit along the route marking;
(B) detecting a head disk (14) located below the material web by means of a second detector (24) and determining the position of the head disk (14) ;
(C) approaching and remaining at an operating position during the fastening process (D)-(F);
(D) positioning an induction heater (30) and heating up the head disk (14) for a period of time Th;
(E) removing the induction heater (30) and pressing the material web against the head disk by means of a cooling device (32);
(F) taking off the cooling device after expiry of a predetermined time Tk;
(G) proceeding with (A) until the end of the route marking is reached.

2. The method according to claim 1, **characterized in that** the route marking is affixed to the material web and the first detector on the fastening unit uses an optical detecting method.

3. The method according to claim 1, **characterized in that** the route marking is affixed below the material web and the first detector on the fastening unit uses an inductive, magnetic or capacitive detecting method.

4. The method according to claims 1-3, **characterized in that** the methods steps (B) to (D) can be divided into:
(B1) detecting the position of the metallic head disk (14) relative to the fastening unit (20) by means of a linear detector line (second detector (24)) arranged transversely to the driving direction and formed from discrete induction sensors (25);
(B2) calculating the travel distance Sr, which is still required, along the route marking until a first operating position of the fastening unit (20) is reached;
(C1) moving the fastening unit (20) by the distance Sr;
(C2) stopping the fastening unit (20);
(D1) positioning a fine measuring device (39) based on the information from step (B1) above the first operating position;
(D2) increasing the precision of the determined first operating position based on the information of a precision measuring device (39) and determining a second, more precise operating position;
(D3) positioning the induction heater (30) at the second operating position;
(D4) heating up the head disk (14) for a period of time Th.

5. A self-propelled fastening unit (20) for carrying out a method according to claims 1-4, comprising:
- a chassis with at least one electric motor which acts on wheels (26, 27), tracks or other drive means;
- an induction heater (30) for heating a metallic head disk (14);
- a cooling device (32) for pressing on and cooling a connection point between a material web (13) and the metallic head disk (14);
- a first detector (22) for detecting a route marking;
- a second detector (24) for detecting the position of a head disk;
- a navigation system for moving the fastening unit (20) ;
- at least one computer unit for evaluating detector signals, for determining driving signals and for controlling the fastening process.

6. The self-propelled fastening unit (20) according to claim 5, comprising an additional positioning system (36, 38) which enables fine orientation of the induction heater (30) or the cooling device (32), respectively, while the fastening unit (20) remains in the operating position.

7. The self-propelled fastening unit (20) according to claims 5-6, **characterized in that** the positioning system (36, 38) enables fine orientation in all three Cartesian spatial axes.

8. The self-propelled fastening unit (20) according to claims 5-7, **characterized in that** the positioning system (36, 38) is adapted to press the induction heater (30) or the cooling device (32), respectively, on a set point position with a defined contact pressure.

9. The self-propelled fastening unit (20) according to claims 5-8, **characterized in that** the cooling device (32) is a passive cooling element.

10. The self-propelled fastening (20) unit according to claims 5-8, **characterized in that** the cooling device (32) is a cooling element comprising a fluid-supported, gas-supported or electrically active cooling.

11. The self-propelled fastening unit (20) according to claims 5-10, **characterized in that** at least one third detector (39) or set of detectors (39a-d) is affixed to the cooling device (32), which are connected in a feedback loop with the positioning system and act as a fine measuring device (39) to facilitate the fine positioning.

12. The self-propelled fastening unit (20) according to claims 5-11, **characterized in that** the induction heater (30) and the cooling device (32) are installed in a rotatable revolver carrier (34), which allows positioning of the induction heater (30) or the cooling device (32) above the same setpoint position on the surface in an alternating manner by a rotation, without moving the fastening unit (20) itself or the positioning system (36, 38).

13. The self-propelled fastening unit (20) according to claims 5-12, **characterized in that** the rotatable revolver carrier (34) has at least one further position adapted to receive a marking device, a measuring platform or means for quality testing.

14. The self-propelled fastening unit (20) according to claims 5-10, **characterized in that** at least one third detector (39) or a set of detectors (39a-d) is arranged around the induction heater (30).

## Revendications

1. Procédé de fixation de membranes de matériau (13) comme des membranes pour toiture en matière plastique sur une surface avec des points de fixation (16) disposés dessus, au moyen d'un appareil de fixation (20) automoteur (20), sachant que les points de fixation (16) sont constitués sous la forme de plaques de tête (14) métalliques avec une couche de colle thermofusible en direction de la membrane de matériau, comprenant les étapes suivantes :
(A) Identification d'un repérage de déplacement disposé sur la surface par un premier détecteur (22) sur l'appareil de fixation (20) et déplacement de l'appareil de fixation le long du repérage de déplacement,
(B) identification d'une plaque de tête (14) se situant sous la membrane de matériau au moyen d'un deuxième détecteur (24) et détermination de la position de la plaque de tête (14),
(C) approche et maintien à une position de travail pendant l'opération de fixation (D)-(F),
(D) positionnement d'un appareil de chauffage par induction (30) et réchauffage de la plaque de tête (14) pour une durée Th
(E) enlèvement de l'appareil de chauffage par induction (30) et application de la membrane de matériau à la plaque de tête au moyen d'un système de refroidissement (32),
(F) enlèvement du système de refroidissement après expiration d'un temps prédéfini Tk,
(G) poursuite avec l'étape (A) jusqu'à ce que la fin du repérage de déplacement soit atteinte.

2. Procédé selon la revendication 1, **caractérisé en ce que** le repérage de déplacement est disposé sur la membrane de matériau et le premier détecteur sur l'appareil de fixation utilise un procédé d'identification optique.

3. Procédé selon la revendication 1, **caractérisé en ce que** le repérage de déplacement est disposé sous la membrane de matériau et le premier détecteur sur l'appareil de fixation utilise un procédé d'identification inductif, magnétique ou capacitif.

4. Procédé selon la revendication 1-3, **caractérisé en ce que** les étapes de procédé (B) à (D) peuvent être subdivisées en :
(B1) identification de la position de la plaque de tête métallique (14) par rapport à l'appareil de fixation (20) au moyen d'une rangée de détecteurs (deuxième détecteur (24)) disposée de façon linéaire, transversalement à la direction de déplacement, formée de capteurs par induction (25) discrets,
(B2) calcul de la distance de déplacement Sr encore nécessaire le long du repérage de déplacement jusqu'à ce qu'une première position de travail de l'appareil de fixation (20) soit atteinte,
(C1) déplacement de l'appareil de fixation (20) de la distance Sr,
(C2) maintien de l'appareil de fixation (20),
(D1) positionnement d'un dispositif de mesure précis (39) à l'aide des informations obtenues de l'étape (B1) sur la première position de travail,
(D2) précision de la première position de travail déterminée à l'aide des informations d'un dispositif de mesure de précision (39) et détermination d'une deuxième position de travail précisée,
(D3) positionnement de l'appareil de chauffage par induction (30) à la deuxième position de travail,
(D4) réchauffage de la plaque de tête (14) pour une durée Th.

5. Appareil de fixation automoteur (20) pour exécuter un procédé selon la revendication 1-4, comportant :
- un mécanisme de déplacement avec au moins un moteur électrique, qui agit sur des roues (26, 27), des chenilles ou d'autres moyens d'entraînement,
- un appareil de chauffage par induction (30) pour réchauffer une plaque de tête métallique (14),
- un système de refroidissement (32) pour comprimer et refroidir un point de liaison entre la membrane de matériau (13) et la plaque de tête métallique (14),
- un premier détecteur (22) pour identification d'un repérage de déplacement,
- un deuxième détecteur (24) pour identification de la position d'une plaque de tête,
- un système de navigation pour déplacer le système de fixation (20),
- au moins une unité de calcul pour exploiter des signaux de détection, pour déterminer des signaux de déplacement et pour commander l'opération de fixation.

6. Appareil de fixation automoteur (20) selon la revendication 5, avec un système de positionnement (36, 38) supplémentaire, qui permet une orientation précise de l'appareil de chauffage par induction (30) ou du système de refroidissement (32), alors que l'appareil de fixation (20) lui-même demeure dans la position de travail.

7. Appareil de fixation automoteur (20) selon la revendication 5-6, **caractérisé en ce que** le système de positionnement (36, 38) permet l'installation précise dans les trois axes spatiaux cartésiens.

8. Appareil de fixation automoteur (20) selon la revendication 5-7, **caractérisé en ce que** le système de positionnement (36, 38) est conçu de telle sorte que l'appareil de chauffage par induction (30) ou le système de refroidissement (32) appuient sur une position théorique avec une pression de compression définie.

9. Appareil de fixation automoteur (20) selon la revendication 5-8, **caractérisé en ce que** le système de refroidissement (32) est un corps de refroidissement passif.

10. Appareil de fixation automoteur (20) selon la revendication 5-8, **caractérisé en ce que** le système de refroidissement (32) est un corps de refroidissement avec un refroidissement actif assisté par fluide, gaz ou électrique.

11. Appareil de fixation automoteur (20) selon la revendication 5-10, **caractérisé en ce qu'au** moins un troisième détecteur (39) ou un ensemble de détecteurs (39a-d) est monté sur le système de refroidissement (32), lesquels se trouvent dans une boucle de rétroaction avec le système de positionnement et assistent le positionnement précis en tant que dispositif de mesure précis (39).

12. Appareil de fixation automoteur (20) selon la revendication 5-11, **caractérisé en ce que** l'appareil de chauffage par induction (30) et le système de refroidissement (32) sont montés dans un dispositif revolver rotatif (34), ce qui permet de positionner sur la surface en alternance l'appareil de chauffage par induction (30) ou le système de refroidissement (32) par un mouvement de rotation sur la même position théorique sans bouger l'appareil de fixation (20) lui-même ou le système de positionnement (36, 38).

13. Appareil de fixation automoteur (20) selon la revendication 5-12, **caractérisé en ce que** le dispositif revolver rotatif (34) comporte au moins une autre position, qui permet le logement d'un dispositif de repérage, d'une plateforme de mesure ou de moyens de contrôle de qualité.

14. Appareil de fixation automoteur (20) selon la revendication 5-10, **caractérisé en ce qu'**au moins un troisième détecteur (39) ou un ensemble de détecteurs (39a-d) sont disposés autour de l'appareil de chauffage par induction (30).
